# EUROPEAN PATENT SPECIFICATION

(11) **EP 2 498 329 B1**
(45) Date of publication and mention of the grant of the patent: **01.01.2014**
(21) Application number: 12152386.4
(22) Date of filing: 25.01.2012
(51) Int. Cl.: H01M 10/052, H01M 10/0567, H01M 10/0569, H01M 10/0568

(54) **Non-aqueous electrolyte for rechargeable lithium battery and rechargeable lithium battery including the same**
Nichtwässriger Elektrolyt für wiederaufladbare Lithium-Batterie und wiederaufladbare Lithium-Batterie damit
Électrolyte non aqueux pour batterie rechargeable au lithium et batterie rechargeable au lithium l'incluant

(30) Priority: 10.03.2011 US 201161451450 P; 21.11.2011 US 201113301177
(43) Date of publication of application: 12.09.2012
(73) Proprietor: Samsung SDI Co., Ltd., Gyeonggi-do (KR); Robert Bosch GmbH, 70442 Stuttgart (DE)
(72) Inventor: Yoon, Su-Jin, Gyeonggi-do (KR); Kim, Kwang-Soo, Gyeonggi-do (KR)
(74) Representative: Gulde Hengelhaupt Ziebig & Schneider

(56) References cited:
- EP-A1- 2 262 047
- US-A1- 2008 193 852
- SHUI ZHANG ET AL: "An unique lithium salt for the improved electrolyte of Li-ion battery", ELECTROCHEMISTRY COMMUNICATIONS, ELSEVIER, AMSTERDAM, NL, vol. 8, no. 9, 1 September 2006 (2006-09-01), pages 1423-1428, XP028041652, ISSN: 1388-2481, DOI: 10.1016/J.ELECOM.2006.06.016 [retrieved on 2006-09-01]
- LIU ET AL: "Lithium difluoro(oxalato)borate as a functional additive for lithium-ion batteries", ELECTROCHEMISTRY COMMUNICATIONS, ELSEVIER, AMSTERDAM, NL, vol. 9, no. 3, 13 March 2007 (2007-03-13), pages 475-479, XP005920476, ISSN: 1388-2481, DOI: 10.1016/J.ELECOM.2006.10.022

## Description

The present invention relates to a non-aqueous electrolyte for a rechargeable lithium battery and a rechargeable lithium battery including the same.

### Description of the Related Art

Recently energy-storing technology has drawn increasing attention. As a battery is widely used for an electric car as well as a mobile phone, a camcorder, and a laptop PC, with a high energy density, it is increasingly required to have a higher energy density. This requirement can be most satisfied by a rechargeable lithium battery, on which is actively researched.

A rechargeable lithium battery developed in early 1990's includes a negative electrode made of a carbon material and the, like which can intercalate and deintercalate lithium ions, a positive electrode made of a lithium-containing oxide and the like, and a non-aqueous electrolyte prepared by appropriately dissolving a lithium salt in a mixed organic solvent.

A rechargeable lithium battery has an average discharge voltage ranging from about 3.6 to 3.7V and a higher discharge voltage than another alkali battery, a nickel-cadmium battery, and the like. In order to accomplish this high driving voltage, a rechargeable lithium battery needs an electrolyte solution composition electrochemically stable in a charge and discharge voltage region ranging from 0 to 4.2V. Accordingly, the electrolyte solution includes a mixed solvent prepared by appropriately mixing a cyclic carbonate compound such as ethylene carbonate, propylene carbonate, and the like and a linear carbonate compound such as dimethyl carbonate, ethylmethyl carbonate, diethyl carbonate, and the like and includes a lithium salt such as LiPF₆, LiBF₄, LiClO₄, and the like as a solute. The electrolyte solution plays a role of a lithium ion source to work a lithium battery.

When a rechargeable lithium battery is initially charged, lithium ions come out from a positive active material such as a lithium metal oxide and the like, move toward a negative active material such as graphite and the like, and then, are inserted between negative active material layers

Herein, since lithium has strong reactivity, an electrolyte solution reacts with a lithium salt on the surface of a negative active material such as graphite and the like, producing a compound such as Li₂CO₃, Li₂O, LiOH, and the like. These compounds form a so-called SEI (Solid Electrolyte Interface) layer on the surface of the negative active material such as graphite and the like.

The SEI layer plays a role of an ion tunnel and thus, passes only lithium ions. Thus, the SEI layer brings about an ion tunnel effect that organic solvent molecules with a big molecular weight are prevented from being inserted between negative active material layers and destroying a negative electrode when they move with lithium ions. Accordingly, the SEI layer may prevent an electrolyte solution from contacting with a negative active material and thus, the electrolyte solution from being decomposed and resultantly, reversibly maintain the amount of lithium ions in the electrolyte solution and thus, maintain stable charge and discharge.

However, the SEI layer does not continuously protect a negative electrode and deteriorates cycle-life and performance as a battery is repetitively charged and discharged. In particular, since the SEI layer for a rechargeable lithium battery is not thermally stable, it may be easily destroyed due to increasing electrochemical energy and thermal energy when a battery works or is allowed to stand at a high temperature. Accordingly, a propionate-based solvent is used to improve low temperature characteristic and to prevent gas generation when a battery is allowed to stand at a high temperature. However, the propionate-based solvent may cause a side effect at a negative electrode, deteriorating capacity and power output.

EP 2 262 047 A1 discloses a non-aqueous electrolyte for a lithium secondary battery including methyl acetate as a solvent and tris(trialkylsilyl)phosphate or tris(trialkylsilyl)borate as an additive. US 2008/0193852 A1 and Sheng Shui Zhang, An unique lithium salt for the improved electrolyte of Li-ion battery, Electrochemistry Communications 8 (2006), 1423-1428 disclose the use of lithium difluoro(oxalate) borate as an additive of the non-aqueous electrolyte.

### SUMMARY OF THE INVENTION

The present invention provides a non-aqueous electrolyte for a rechargeable lithium battery that can improve battery capacity, cycle-life, and performance deterioration and prevent battery capacity deterioration and output decrease when a battery is allowed to stand at a high temperature or a room temperature as well as simultaneously improve battery performance at a low temperature.

According to one aspect of the present invention there is provided a non-aqueous electrolyte for a rechargeable lithium battery comprising:
- a lithium salt;
- a non-aqueous organic solvent including more than 50 wt% of an ester-based solvent based on the total weight of the non-aqueous organic solvent;
- a first additive of lithium difluoro(oxalate) borate (LiF₂OB); and
- a second additive selected from the group consisting of tris(trialkylsilyl)phosphate, tris(trialkylsilyl)phosphite, tris(trialkylsilyl)borate, and mixtures thereof.

The second additive may be a tris(trialkylsilyl)phosphate having a C1-C3 alkyl moiety, especially tris(trimethylsilyl)phosphate.

The second additive is included in an amount of 0.1wt% to 5wt% based on the total weight of the non-aqueous electrolyte.

The first additive is included in an amount of 0.1wt% to 5.0wt%, especially 0.5wt% to 5.0wt%, based on the total weight of the non-aqueous electrolyte.

A weight ratio of the first and second additive may be in the range of 1: 0.5 to 1: 10, especially in the range of 1: 0.5 to 1 : 4.

The ester-based solvent is an alkyl propionate. Preferably, the ester-based solvent is at least one of methyl propionate and ethyl propionate.

The non-aqueous organic solvent may further include at least one of a carbonate-based, ether-based, ketone-based, alcohol-based, and aprotic solvent along with the ester-based solvent. The further solvent may especially be a carbonate-based solvent. The carbonate-based solvent may be at least one of a cyclic carbonate and a linear carbonate.

The non-aqueous electrolyte may further include at least one of 1,3-propene sultone and vinylethylene carbonate.

According to another aspect of the present invention, a rechargeable lithium battery including the above mentioned non-aqueous electrolyte is provided.

The non-aqueous electrolyte may improve battery capacity, cycle-life, and performance deterioration and simultaneously, battery performance at a low temperature and prevent battery capacity deterioration and output deterioration when a battery is allowed to stand at a high temperature or a room temperature for a long time.

### BRIEF DESCRIPTION OF THE DRAWING

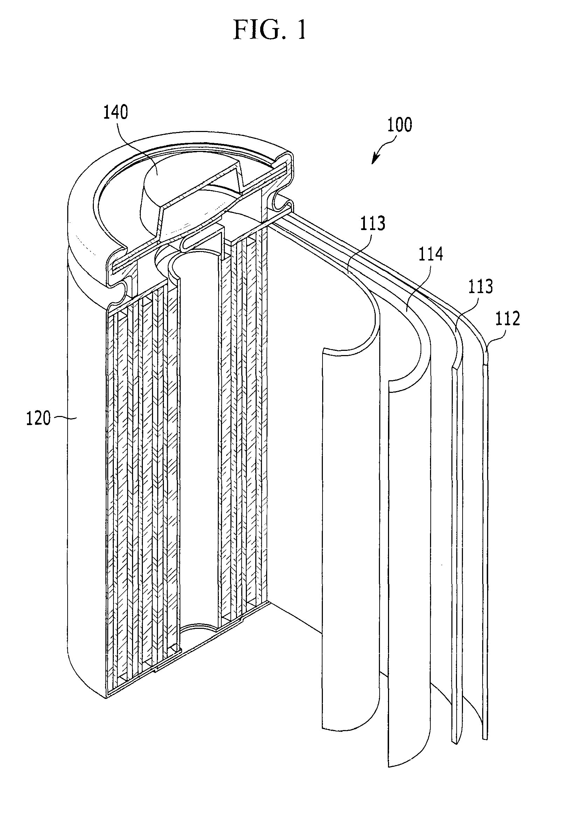

FIG. 1 is a schematic view showing a rechargeable lithium battery according to one embodiment of the present invention.

### DETAILED DESCRIPTION

Exemplary embodiments of the present invention will hereinafter be described in detail.

According to one embodiment of the present invention, when an ester-based solvent is used in an amount of 50 wt% or more based on the total amount of a non-aqueous organic solvent, the non-aqueous organic solvent may sufficiently improve battery performance at a low temperature. In addition, when the non-aqueous organic solvent includes lithium difluoro(oxalate) borate as a first additive, it may improve battery capacity, cycle-life, and performance. When phosphate salt, phosphite salt, or boron acid salt as a second additive as well as the first additive are used, the non-aqueous organic solvent may improve battery performance at a low temperature and prevent battery deterioration and output deterioration when a battery is allowed to stand at a high temperature or a room temperature for a long time.

In other words, a non-aqueous electrolyte for a rechargeable lithium battery includes a lithium salt; a non-aqueous organic solvent including an ester-based solvent in an amount of 50 wt% or more; lithium difluoro(oxalate) borate; and an second additive selected from the group consisting of tris(trialkylsilyl)phosphate, tris(trialkylsilyl)phosphite, tris(trialkylsilyl)borate, and a mixture thereof.

Hereinafter, each component is illustrated in detail.

### Lithium Salt

The lithium salt is dissolved in a non-aqueous organic solvent and plays a role of a lithium ion source in a battery to basically work a rechargeable lithium battery and promotes lithium ion transfer between positive and negative electrodes. Examples of the lithium salt include LiPF₆, LiBF₄, LiSbF₆, LiAsF₆, LiC₄F₉SO₃, LiClO₄, LiAlO₂, LiAlCl₄, LiN(CₓF₂ₓ₊₁SO₂)(C_{y}F_{2y+1}SO₂) (herein, x and y are a natural number), LiCl, Lil, LiB(C₂O₄)₂ (lithium bis(oxalato) borate; LiBOB), or a mixture thereof, as a supporting electrolytic salt.

The lithium salt may be included in a concentration ranging from 0.1 to 2.0M. When a lithium salt is used in a concentration within the range, an electrolyte may have appropriate conductivity and viscosity and thus, bring about excellent electrolyte performance and effectively transfer lithium ions.

### Non-aqueous Organic Solvent

The non-aqueous organic solvent serves as a medium for transmitting ions taking part in electrochemical reaction of a battery.

According to one embodiment of the present invention, the non-aqueous organic solvent including an ester-based solvent in an amount of 50wt% or more and specifically, in an amount of 50wt% to 90wt% based on the total amount of the organic solvent.

The ester-based solvent includes an alkyl propionate such as methyl propionate, ethyl propionate, n-propyl propionate, isopropyl propionate, and so on. The ester-based solvent specifically includes an alkyl propionate improving battery performance at low temperature and remarkably preventing battery capacity deterioration when a battery is allowed to stand and more specifically, methyl propionate, ethyl propionate, n-propyl propionate, isopropyl propionate, or a mixture thereof. Herein, in one embodiment, the alkyl may be a C1 to C10 alkyl.

The non-aqueous organic solvent used in the present invention may further include carbonate-based, ether-based, ketone-based, alcohol-based, or aprotic solvent along with the ester-based solvent.

The carbonate-based solvent may include a cyclic carbonate such as dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate, and so on; and a linear carbonate such as ethylene carbonate (EC), propylene carbonate (PC), butylene carbonate (BC), vinylene carbonate, and so on. Examples of the ether-based solvent include dibutyl ether, tetraglyme, diglyme, dimethoxyethane, 2-methyltetrahydrofuran, tetrahydrofuran, and so on, and examples of the ketone-based solvent include cyclohexanone, and the like. Examples of the alcohol-based solvent include ethyl alcohol, isopropyl alcohol, and so on, and examples of the aprotic solvent include nitriles such as R-CN (wherein R is a C2 to C20 linear, branched, or cyclic hydrocarbon group that optionally include a double bond, an aromatic ring, or an ether bond), acetonitrile, and so on, amides such as dimethyl formamide, dioxolanes such as 1,3-dioxolane, sulfolanes, sulfites such as ethylene sulfite, propylene sulfite, and so on, alkoxyethanes such as methoxyethane, diethoxyethane, and so on, sulfoxides such as dimethylsulfoxide, and the like.

The non-aqueous organic solvent may be used singularly or in a mixture. When the organic solvent is used in a mixture, the mixture ratio can be controlled in accordance with a desirable battery performance.

The carbonate-based solvent may include a mixture of a cyclic carbonate and a linear carbonate. When the cyclic carbonate and the chain carbonate are mixed together in the volume ratio of about 1:1 to about 1:9 to prepare an electrolyte, the electrolyte performance may be enhanced.

In addition, the electrolyte of the present invention may further include mixtures of carbonate-based solvents and aromatic hydrocarbon-based solvents. The carbonate-based solvents and the aromatic hydrocarbon-based solvents may be mixed together in the volume ratio of about 1:1 to about 30:1.

The aromatic hydrocarbon-based organic solvent may be represented by the following Chemical Formula 1:

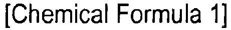

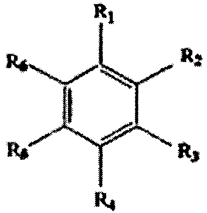

In Chemical Formula 1, R₁ to R₆ are independently hydrogen, halogen, a C1 to C10 alkyl group, a C1 to C10 haloalkyl group, or combinations thereof.

The aromatic hydrocarbon-based organic solvent may include, but is not limited to, at least one selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or combinations thereof.

The non-aqueous electrolyte may further include vinylene carbonate or an ethylene carbonate-based compound of the following Chemical Formula 2 as a third additive:

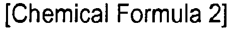

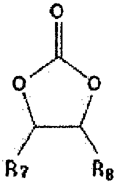

In Chemical Formula 2, R₇ and R₈ are independently hydrogen, a halogen, a cyano (CN), a nitro (NO₂), and a C1 to C5 fluoroalkyl, provided that at least one of R₇ and R₈ is a halogen, a nitro (NO₂), or a C1 to C5 fluoroalkyl and R₇ and R₈ are not simultaneously hydrogen.

The ethylene carbonate-based compound includes fluoroethylene carbonate, difluoro ethylene carbonate, chloroethylene carbonate, dichloroethylene carbonate, bromoethylene carbonate, dibromoethylene carbonate, nitroethylene carbonate, cyanoethylene carbonate, and the like.

The use amount of the third additive for improving cycle life may be adjusted within an appropriate range.

In one embodiment of the present invention, the non-aqueous organic solvent may include a mixture of an ester-based solvent and a cyclic carbonate. When the ester-based solvent and the cyclic carbonate are mixed together in a weight ratio of about 4:1 to about 1:1 to prepare an electrolyte, the electrolyte performance may be enhanced.

Further, the non-aqueous organic solvent may include a mixture of an ethylene carbonate, and a methyl propionate or an ethyl propionate.

### First Additive

The first additive of lithium difluoro(oxalate) borate may form a porous thin inorganic SEI layer unlike an additive forming a conventional organic layer and thus, improve cycle-life of a rechargeable lithium battery when a battery is allowed to stand at a high temperature and also, low temperature and output characteristics.

The lithium difluoro(oxalate) borate is included in an amount of 0.1wt% to 5wt%, especially 0.5wt% to 5wt%, based on the total weight of a non-aqueous electrolyte. When it is included within the range, it may bring about excellent ion conductivity.

### Second Additive

The non-aqueous electrolyte includes a second additive selected from tris(trialkylsilyl)phosphate, tris(trialkylsilyl)phosphite, tris(trialkylsilyl)borate, and a mixture thereof to prevent battery capacity deterioration and improve output characteristic when a battery is allowed to stand at a high temperature or higher than a room temperature for a long time.

When the second additive is added to an electrolyte solution, it may work as a HF scavenger and suppress LiF production on the surface of a negative electrode SEI layer during the initial charge and thus, improve output characteristic of a rechargeable lithium battery.

In particular, the second additive may include tris(trialkylsilyl)phosphate such as tris(trimethylsilyl)phosphate, tris(triethylsilyl)phosphate, and the like; tris(trialkylsilyl)phosphite such as tris(trimethylsilyl)phosphite, tris(triethylsilyl)phosphate, and the like; and tris(trialkylsilyl)borate such as tris(trimethylsilyl)borate, tris(triethylsilyl)borate, and the like in a singular or a mixture of more than two. The alkyl indicates C1 to C3 alkyl moieties.

The second additive is included in an amount of 0.1wt% to 5wt% based on the total weight of a non-aqueous electrolyte.

On the other hand, when the first additive is extremely more included than the second additive in a non-aqueous electrolyte, an SEI layer is formed to be dense, deteriorating power output. In addition, non-reacting second additive may generate gas when a battery is allowed to stand at a high temperature. On the contrary, when the second additive is extremely more included than the first additive, deteriorating battery performance when a battery is allowed to stand. Accordingly, according to one embodiment of the present invention, when a non-aqueous electrolyte may include the first and second additives in a weight ratio ranging from 1:0.5 to 1:10, preferred 1:0.5 to 1:4 and specifically, from 1:0.5 to 1:2 within each component condition, the non-aqueous electrolyte may improve output and characteristic when a battery is allowed to stand at a high temperature.

In addition, a non-aqueous electrolyte according to one embodiment of the present invention may include a third additive selected from the group consisting of 1,3-propene sultone, vinylethylene carbonate, and a mixture thereof to prevent battery capacity and output deteriorations.

Herein, the third additive may be included in an amount of about 0.1wt% to about 10wt% based on the total weight of a non-aqueous electrolyte. Specifically, 1,3-propene sultone may be included in an amount of about 0.1wt% to about 5wt%, and vinylethylene carbonate may be included in an amount of about 0.1wt% to about 5wt% based on the total amount of the non-aqueous electrolyte.

Accordingly, a non-aqueous electrolyte having the above composition according to the present invention may improve battery capacity, cycle-life, and performance deterioration and simultaneously, prevent battery capacity and output deteriorations when a battery is allowed to stand at a high temperature or a room temperature.

According to another embodiment of the present invention, a rechargeable lithium battery including the non-aqueous electrolyte is provided.

Rechargeable lithium batteries may be classified as lithium ion batteries, lithium ion polymer batteries, and lithium polymer batteries according to the presence of a separator and the kind of electrolyte used therein. The rechargeable lithium batteries may have a variety of shapes and sizes, and include cylindrical, prismatic, coin, or pouch-type batteries, and may be thin film batteries or may be rather bulky in size. These battery structures and their manufacturing method are well-known in a related field, and so, detailed description regarding them is omitted.

FIG. 1 is an exploded perspective view showing a rechargeable lithium battery. Referring to FIG. 1, the rechargeable lithium battery 100 has a cylindrical type and includes a negative electrode 112, a positive electrode 114, a separator 113 interposed between the negative electrode 112 and the positive electrode 114, an electrolyte (not shown) impregnating the separator 113, a battery case 120, and a sealing member 140 sealing the battery case 120. The rechargeable lithium battery 100 is fabricated by sequentially accumulating stacking a negative electrode 112, a positive electrode 114, and a separator 113, and spiral-winding them and then, housing the wound product in a container.

The negative electrode 112 includes a current collector and a negative active material layer disposed thereon. The negative active material layer includes a negative active material.

Examples of the negative active material include a material that reversibly intercalates/deintercalates lithium, a lithium metal, a lithium metal alloy, a material being capable of doping lithium, or a transition metal oxide.

The material that can reversibly intercalate/deintercalate lithium ions includes a carbon material. The carbon material may be any generally-used carbon-based negative active material used in a lithium ion rechargeable battery. Examples of the carbon material include crystalline carbon, amorphous carbon, or a mixture thereof. The crystalline carbon may be non-shaped, or sheet, flake, spherical, or fiber shaped natural graphite or artificial graphite. The amorphous carbon may be a soft carbon (carbon obtained through sintering at a low temperature), a hard carbon (carbon obtained through sintering at a high temperature), mesophase pitch carbonized product, fired coke, and so on.

Examples of the lithium metal alloy includes lithium and a metal selected from the group consisting of Na, K, Rb, Cs, Fr, Be, Mg, Ca, Sr, Si, Sb, Pb, In, Zn, Ba, Ra, Ge, Al, or Sn.

Examples of the material being capable of doping lithium include Si, SiOx (0 < x < 2), a Si- X₁ alloy (where X₁ is an element selected from the group consisting of an alkali metal, an alkaline-earth metal, a group 13 element, a group 14 element, a transition element, a rare earth element, and combinations thereof and not Si), Sn, SnO₂, a Sn-X₂ alloy (where X₂ is an element selected from the group consisting of an alkali metal, an alkaline-earth metal, a group 13 element, a group 14 element, a transition element, a rare earth element, and combinations thereof and is not Sn), or mixtures thereof. At least one of these materials may be mixed with SiO₂. Examples of the elements X₁ and X₂ be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof.

Examples of the transition metal oxide include vanadium oxide, lithium vanadium oxide, and the like.

The negative active material layer includes a binder, and optionally a conductive material.

The binder improves binding properties of negative active material particles with one another and with a current collector. Examples of the binder include at least one selected from the group consisting of polyvinyl alcohol, carboxylmethyl cellulose, hydroxypropyl cellulose, polyvinyl chloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is included to improve electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber; a metal-based material such as a metal powder or a metal fiber including copper, nickel, aluminum, silver, and so on; a conductive polymer such as a polyphenylene derivative, or mixtures thereof.

The current collector may be selected from a copper foil, a nickel foil, a stainless steel foil, a titanium foil, a nickel foam, a copper foam, a polymer substrate coated with a conductive metal, or combinations thereof.

The positive electrode 114 includes a current collector and a positive active material layer disposed on the current collector.

The positive active material includes lithiated intercalation compounds that reversibly intercalate and deintercalate lithium ions. The positive active material may include a composite oxide including at least one selected from the group consisting of cobalt, manganese, and nickel, as well as lithium. In particular, the following lithium-containing compounds may be used: LiₐA_{1-b}R_{b}D₂ (wherein, in the above formula, 0.90 ≤ a ≤ 1.8 and 0 ≤ b ≤ 0.5); LiₐE_{1-b}R_{b}O_{2-c}D_{c} (wherein, in the above formula, 0.90 ≤ a ≤ 1.8, 0 ≤ b ≤ 0.5 and 0 ≤ c ≤ 0.05); LiE_{2-b}R_{b}O_{4-c}D_{c} (wherein, in the above formula, 0 ≤ b ≤ 0.5, and 0 ≤ c ≤ 0.05); LiₐNi_{1-b-c}Co_{b}R_{c}D_{α} (wherein, in the above formula, 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α} (wherein, in the above formula, 0.90 ≤ a ≤ 1.8, 0 ≤ b ≤ 0.5, 0 ≤ c ≤ 0.05 and 0 < α < 2); LiₐNi_{1-b-c}CO_{b}R_{c}O_{2-α}Z₂ (wherein, in the above formula, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (wherein, in the above formula, 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α} (wherein, in the above formula, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ (wherein, in the above formula, 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein, in the above formula, 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GeO₂ (wherein, in the above formula, 0.90 ≤ a ≤ 1.8, 0 ≤ b ≤ 0.9, 0 ≤ c ≤ 0.5, 0 ≤ d ≤ 0.5 and 0.001 ≤ e ≤ 0.1); LiₐNiG_{b}O₂ (wherein, in the above formula, 0.90 ≤ a ≤ 1.8 and 0.001 ≤ b ≤ 0.1); LiₐCoG_{b}O₂ (wherein, in the above formula, 0.90 ≤ a ≤ 1.8 and 0.001 ≤ b ≤ 0.1); LiₐMnG_{b}O₂ (wherein, in the above formula, 0.90 ≤ a ≤ 1.8 and 0.001 ≤ b ≤ 0.1); LiₐMn₂G_{b}O₄ (wherein, in the above formula, 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂PO₄)₃ (0 ≤ f ≤ 2); Li_{(3-f)}Fe₂(PO₄)₃ (0 ≤ f ≤ 2); and LiFePO₄.

In the above formulae, A is selected from Ni, Co, Mn, and combinations thereof; R is selected from Al, Ni, Co, Mn, Cr, Fe, Mg, Sr, V, a rare earth element, and combinations thereof; D is selected from O, F, S, P, and combinations thereof; E is selected from Co, Mn, and combinations thereof; Z is selected from the group consisting of F, S, P, and combinations thereof; G is selected from Al, Cr, Mn, Fe, Mg, La, Ce, Sr, V, and combinations thereof; Q is selected from Ti, Mo, Mn, and combinations thereof; T is selected from Cr, V, Fe, Sc, Y, and combinations thereof; and J is selected from V, Cr, Mn, Co, Ni, Cu, and combinations thereof.

The compound may have a coating layer on the surface, or may be mixed with another compound having a coating layer. The coating layer may include a coating element compound such as an oxide of a coating element, a hydroxide, an oxyhydroxide of a coating element, an oxycarbonate of a coating element, or a hydroxyl carbonate of a coating element. The compound for a coating layer may be amorphous or crystalline. The coating element for a coating layer may include Mg, Al, Co, K, Na, Ca, Si, Ti, V, Sn, Ge, Ga, B, As, Zr, or mixtures thereof. The coating layer may be formed in a method having no adverse influence on properties of a positive active material by including these elements in the compound. For example, the method may include any coating method such as spray coating, dipping, and the like, but is not illustrated in more detail, since it is well-known to those who work in the related field.

The positive active material layer also includes a binder and a conductive material.

The binder improves binding properties of the positive active material particles to one another and also, with a current collector. Examples of the binder include at least one selected from the group consisting of polyvinyl alcohol, carboxylmethyl cellulose, hydroxypropyl cellulose, diacetyl cellulose, polyvinylchloride, carboxylated polyvinyl chloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon.

The conductive material is included to improve electrode conductivity. Any electrically conductive material may be used as a conductive material unless it causes a chemical change. Examples of the conductive material include natural graphite, artificial graphite, carbon black, acetylene black, ketjen black, a carbon fiber, a metal powder or a metal fiber including copper, nickel, aluminum, silver, and so on, and a polyphenylene derivative.

The current collector may be Al.

The negative electrode 112 and positive electrode 114 may be fabricated by a method including mixing the active material, a conductive material, and a binder into an active material composition and coating the composition on a current collector. The electrode manufacturing method is well known and thus, is not described in detail in the present specification. The solvent can be N-methylpyrrolidone.

The electrolyte is the same as described above.

The rechargeable lithium battery may further include a separator 113 between the positive electrode 114 and negative electrode 112, as needed. The separator 113 may include any material used in conventional lithium secondary batteries. Non-limiting examples of suitable separator materials include polyethylene, polypropylene, polyvinylidene fluoride, and multi-layers thereof such as a polyethylene/polypropylene double-layered separator, a polyethylene/polypropylene/polyethylene three-layered separator, and a polypropylene/polyethylene/polypropylene three-layered separator.

The following examples illustrate the present invention in more detail.

### Example 1

1.15M of a LiPF₆ solution was prepared by adding LiPF₆ to a mixed solvent prepared by mixing ethylene carbonate (EC) and ethyl propionate (EP) in a weight ratio of 2:8. Then, 0.5wt% of lithium difluoro(oxalate) borate (LF₂OB) and 2wt% of tris(trimethylsilyl)phosphate were added thereto based on the total weight of a non-aqueous electrolyte, preparing the non-aqueous electrolyte.

On the other hand, lithium nickel cobalt manganese oxide as a positive active material, polyvinylidene fluoride (PVDF) as a binder, and carbon as a conductive material were mixed in a weight ratio of 92:4:4, and N-methyl-2-pyrrolidone was added thereto, preparing positive slurry. The positive slurry was coated on an 20µm-thick aluminum foil as a current collector, dried in a 120°C vacuum oven, and compressed to fabricate a positive electrode.

Natural graphite as a negative active material and styrene-butadiene rubber (SBR) as a binder were mixed in a weight ratio of 92:8. N-methyl-2-pyrrolidinone was added to the mixture. The resulting mixture was dispersed, preparing negative electrode slurry. The negative electrode slurry was coated on a 15µm-thick copper film as a current collector, dried in a 120°C vacuum oven, and compressed, fabricating a negative electrode.

Then, a 25µm-thick polyethylene porous film as a separator is disposed between the positive and negative electrode, fabricating an electrode assembly. The electrode assembly was spiral-wound and compressed. The resulting product was put in a cylindrical can. The non-aqueous electrolyte was implanted in the can. The can was sealed, fabricating a rechargeable lithium battery cell.

### Examples 2 to 6 and Comparative Examples 1 to 8

Rechargeable lithium battery cells were fabricated according to the same method as Example 1 except for using a non-aqueous electrolyte prepared by mixing components and ratios provided in the following Table 1.

**Table 1**

| | Non-aqueous solvent (weight ratio) | | | | | Li salt (M) | Additive (wt%) | | | | |
|---|---|---|---|---|---|---|---|---|---|---|---|
| | EC | EP | MP | EMC | DMC | LiPF₆ | LiF₂OB | TMSP | PRS | VEC | LiBOB |
| Ex. 1 | 2 | 8 | - | - | - | 1.15 | 0.5 | 2 | - | - | - |
| Ex. 2 | 2 | 8 | - | - | - | 1.15 | 0.5 | 2 | 0.5 | | - |
| Ex. 3 | 2 | 8 | - | - | - | 1.15 | 0.5 | 2 | - | 0.5 | - |
| Ex. 4 | 2 | - | 8 | - | - | 1.15 | 0.5 | 2 | - | - | - |
| Ex. 5 | 2 | - | 8 | - | - | 1.15 | 0.5 | 2 | 0.5 | - | - |
| Ex. 6 | 2 | - | 8 | - | - | 1.15 | 0.5 | 2 | - | 0.5 | - |
| Comp. Ex. 1 | 2 | 8 | - | - | - | 1.15 | - | - | - | - | - |
| Comp. Ex. 2 | 2 | - | - | 4 | 4 | 1.15 | - | - | - | - | - |
| Comp. Ex. 3 | 2 | - | - | 4 | 4 | 1.15 | - | 2 | - | - | 0.5 |
| Comp. Ex. 4 | 2 | - | - | 4 | 4 | 1.15 | - | 2 | 0.5 | - | 0.5 |
| Comp. Ex. 5 | 2 | 8 | - | - | - | 1.15 | - | 2 | - | - | 0.5 |
| Comp. Ex. 6 | 2 | 8 | - | - | - | 1.15 | - | 2 | 0.5 | - | 0.5 |
| Comp. Ex. 7 | 2 | - | - | 4 | 4 | 1.15 | 0.5 | 2 | | - | - |
| Comp. Ex. 8 | 2 | - | - | 4 | 4 | 1.15 | 0.5 | 2 | 2 | - | - |

In Table 1, EC indicates ethylene carbonate, EP indicates ethyl propionate, MP indicates methyl propionate, EMC indicates ethylmethyl carbonate, DMC indicates dimethyl carbonate, LF₂OB indicates lithium difluoro(oxalate) borate, TMSP indicates tris(trimethylsilyl)phosphate, PRS indicates 1,3-propene sultone, VEC indicates vinylethylene carbonate, and LiBOB indicates lithium bisoxalato borate.

### Experimental Example

The battery cells according to Example and Comparative Example were evaluated regarding battery performance. The results are provided in the following Table 2.

Specifically, the DC-IR at -30°C was measured by obtaining an I-V curve after discharging the cells at 1C to 8C for 10 seconds and by predicting a DC-IR value at 2.1V from the obtained curve.

In addition, the battery capacity was measured as follows: the battery cells were allowed to stand with full-charged state (SOC100) at 60°C for 30 days, and discharged at 0.2C at room temperature. Then, the battery cells were charged and discharged at 0.2C at room temperature and the discharge capacity was measured.

**Table 2**

| | -30 °C DC-IR | Discharge capacity after storage at 60°C, for 30 days |
|---|---|---|
| Example 1 | 1.6 ohm | 170 mAh |
| Example 2 | 2 ohm | 173 mAh |
| Example 3 | 1.8 ohm | 173 mAh |
| Example 4 | 1.4 ohm | 170 mAh |
| Example 5 | 1.6 ohm | 172 mAh |
| Example 6 | 1.5 ohm | 173 mAh |
| Comparative Example1 | 2 ohm | 138 mAh |
| Comparative Example2 | 2.8 ohm | 173 mAh |
| Comparative Example3 | 2.4 ohm | 173 mAh |
| Comparative Example4 | 2.8 ohm | 175 mAh |
| Comparative Example5 | 1.6 ohm | 158 mAh |
| Comparative Example6 | 2 ohm | 163 mAh |
| Comparative Example7 | 2.4 ohm | 173 mAh |
| Comparative Example8 | 2.4 ohm | 174 mAh |

As shown in Table 2, the battery cells according to Examples 1 to 6 had excellent low temperature characteristic and high battery capacity when allowed to stand at a high temperature compared with those of Comparative Examples 1 to 8.

## Claims

1. A non-aqueous electrolyte for a rechargeable lithium battery comprising:
- a lithium salt;
- a non-aqueous organic solvent including more than 50 wt% of an alkyl propionate based on the total weight of the non-aqueous organic solvent;
- a first additive of lithium difluoro(oxalate) borate (LiF₂OB), wherein the first additive is included in an amount of 0.1wt% to 5.0wt% based on the total weight of the non-aqueous electrolyte; and
- a second additive selected from the group consisting of tris(trialkylsilyl)phosphate, tris(trialkylsilyl)phosphite, tris(trialkylsilyl)borate, and mixtures thereof, wherein the second additive is included in an amount of 0.1wt% to 5wt% based on the total weight of the non-aqueous electrolyte.

2. The non-aqueous electrolyte of claim 1, wherein the second additive is a tris(trialkylsilyl)phosphate having a C1-C3 alkyl moiety.

3. The non-aqueous electrolyte of claim 2, wherein the second additive is tris(trimethylsilyl)phosphate.

4. The non-aqueous electrolyte of claim 1, wherein lithium difluoro(oxalate) borate is included in an amount of 0.5wt% to 5.0wt% based on the total weight of the non-aqueous electrolyte.

5. The non-aqueous electrolyte of any one of the preceding claims, wherein a weight ratio of the first and second additives is in the range of 1: 0.5 to 1: 10.

6. The non-aqueous electrolyte of claim 5, wherein a weight ratio of the first and second additives is in the range of 1: 0.5 to 1 : 4.

7. The non-aqueous electrolyte of claim 1, wherein the alkyl propionate is one of methyl propionate and ethyl propionate.

8. The non-aqueous electrolyte of any one of the preceding claims, wherein the non-aqueous organic solvent further includes at least one of a carbonate-based, ether-based, ketone-based, alcohol-based, and aprotic solvent along with the ester-based solvent.

9. The non-aqueous electrolyte of claim 8, wherein the non-aqueous organic solvent includes a carbonate-based solvent.

10. The non-aqueous electrolyte of claim 9, wherein the carbonate-based solvent is at least one of a cyclic carbonate and a linear carbonate.

11. The non-aqueous electrolyte of any one of the preceding claims, wherein the non-aqueous electrolyte further includes at least one of 1,3-propene sultone and vinylethylene carbonate.

12. A rechargeable lithium battery comprising a non-aqueous electrolyte of any of claims 1 through 11.

## Patentansprüche

1. Nichtwässriger Elektrolyt fiir eine wiederaufladbare Lithium-Batterie, aufweisend:
- ein Lithiumsalz;
- ein nichtwässriges organisches Lösungsmittel, das mehr als 50 Gew.-% Alkylpropionat basierend auf dem Gesamtgewicht des nichtwässrigen organischen Lösungsmittels aufweist;
- ein erstes Additiv aus Lithium-Difluoro(oxalato)-borat (LiF₂OB), wobei das erste Additiv in einer Menge von 0,1 Gew.-% bis 5,0 Gew.-% basierend auf dem Gesamtgewicht des nichtwässrigen Elektrolyts enthalten ist; und
- ein zweites Additiv, das aus der Gruppe bestehend aus Tris(trialkylsilyl)phosphat, Tris(trialkylsilyl)phosphit, Tris(trialkylsilyl)borat und deren Mischungen ausgewählt ist, wobei das zweite Additiv in einer Menge von 0,1 Gew.-% bis 5 Gew.-% basierend auf dem Gesamtgewicht des nichtwässrigen Elektrolyts ausgewählt ist.

2. Nichtwässriger Elektrolyt nach Anspruch 1, wobei das zweite Additiv ein Tris(trialkylsilyl)phosphat ist, das einen C1-C3-Alkylrest aufweist.

3. Nichtwässriger Elektrolyt nach Anspruch 2, wobei das zweite Additiv Tris(trimethylsilyl)phosphat ist.

4. Nichtwässriger Elektrolyt nach Anspruch 1, wobei Lithium-Difluoro(oxalato)borat in einer Menge von 0,5 Gew.-% bis 5,0 Gew.-% basierend auf dem Gesamtgewicht des nichtwässrigen Elektrolyts enthalten ist.

5. Nichtwässriger Elektrolyt nach einem der vorhergehenden Ansprüche, wobei ein Gewichtsverhältnis des ersten und zweiten Additivs im Bereich von 1:0,5 bis 1:10 liegt.

6. Nichtwässriger Elektrolyt nach Anspruch 5, wobei ein Gewichtsverhältnis des ersten und zweiten Additivs im Bereich von 1:0,5 bis 1:4 liegt.

7. Nichtwässriger Elektrolyt nach Anspruch 1, wobei das Alkylpropionat entweder Methylpropionat oder Ethylpropionat ist.

8. Nichtwässriger Elektrolyt nach einem der vorhergehenden Ansprüche, wobei das nichtwässrige organische Lösungsmittel weiterhin zumindest eines von einem carbonatbasierten, etherbasierten, ketonbasierten, alkoholbasierten und aprotischen Lösungsmittel zusammen mit dem esterbasierten Lösungsmittel aufweist.

9. Nichtwässriger Elektrolyt nach Anspruch 8, wobei das nichtwässrige organische Lösungsmittel ein carbonatbasiertes Lösungsmittel aufweist.

10. Nichtwässriger Elektrolyt nach Anspruch 9, wobei das carbonatbasierte Lösungsmittel wenigstens eins aus Cyclocarbonat und linearem Carbonat ist.

11. Nichtwässriger Elektrolyt nach einem der vorhergehenden Ansprüche, wobei der nichtwässrige Elektrolyt weiterhin 1,3-Propensulton und/oder Vinylethylencarbonat aufweist.

12. Wiederaufladbare Lithiumbatterie, aufweisend einen nichtwässrigen Elektrolyt nach einem der Ansprüche 1 bis 11.

## Revendications

1. Électrolyte non aqueux pour une batterie au lithium rechargeable comprenant :
- un sel de lithium ;
- un solvant organique non aqueux comprenant plus de 50 % en poids d'un propionate d'alkyle par rapport au poids total du solvant organique non aqueux ;
- un premier additif de difluoro(oxalate)borate de lithium (LiF₂OB), dans lequel le premier additif est inclus en une quantité de 0,1 % en poids à 5,0 % en poids par rapport au poids total de l'électrolyte non aqueux ; et
- un second additif sélectionné dans le groupe consistant en le tris(trialkylsilyle)phosphate, le tris(trialkylsilyle)phosphite, le tris(trialkylsilyle)-borate et des mélanges de ceux-ci, dans lequel le deuxième additif est inclus en une quantité de 0,1 % en poids à 5 % en poids par rapport au poids total de l'électrolyte non aqueux.

2. Électrolyte non aqueux selon la revendication 1, dans lequel le deuxième additif est un tris(trialkylsilyle)phosphate comportant un groupe allyle en C₁ à C₃.

3. Électrolyte non aqueux selon la revendication 2, dans lequel le second additif est le tris(triméthylsilyle) phosphate.

4. Électrolyte non aqueux selon la revendication 1, dans lequel du difluoro(oxalate)borate de lithium est inclus en une quantité de 0,5 % en poids à 5,0 % en poids par rapport au poids total de l'électrolyte non aqueux

5. Électrolyte non aqueux selon l'une quelconque des revendications précédentes, dans lequel le rapport en poids des premier et second additifs est dans la plage allant de 1:0,5 à 1:10.

6. Électrolyte non aqueux selon la revendication 5, dans lequel le rapport en poids des premier et second additifs est dans la plage allant de 1:0,5 à 1:4.

7. Électrolyte non aqueux selon la revendication 1, dans lequel le propionate d'alkyle est le propionate de méthyle et/ou le propionate d'éthyle.

8. Électrolyte non aqueux selon l'une quelconque des revendications précédentes, dans lequel le solvant organique non aqueux comprend en outre au moins un solvant à base de carbonate, un solvant à base d'éther, un solvant à base de cétone, un solvant à base d'alcool et/ou un solvant aprotique avec un solvant à base d'ester.

9. Électrolyte non aqueux selon la revendication 8, dans lequel le solvant organique non aqueux comprend un solvant à base de carbonate.

10. Électrolyte non aqueux selon la revendication 9, dans lequel le solvant à base de carbonate est un carbonate cyclique et/ou un carbonate linéaire.

11. Électrolyte non aqueux selon l'une quelconque des revendications précédentes, dans lequel l'électrolyte non aqueux comprend en outre au moins une 1,3-propènesultone ou un carbonate de vinyléthylène.

12. Batterie au lithium rechargeable comprenant un électrolyte non aqueux selon l'une quelconque des revendications 1 à 11.
